# EUROPÄISCHE PATENTSCHRIFT

(11) **EP 0 298 194 B1**
(45) Veröffentlichungstag und Bekanntmachung des Hinweises auf die Patenterteilung: **09.02.1994**
(21) Anmeldenummer: 88103304.7
(22) Anmeldetag: 11.11.1981
(51) Int. Cl.: B60L 13/00

(54) **Elektrischer Antrieb**
Electrical drive
Entraînement électrique

(30) Priorität: 11.11.1980 DE 8030107 U
(43) Veröffentlichungstag der Anmeldung: 11.01.1989
(62) Teilanmeldung aus: 81109637.9
(73) Patentinhaber: Magnet Motor GmbH, D-82319 Starnberg (DE)
(72) Erfinder: Heidelberg, Götz, Dipl.-Phys., D-8136 Percha (DE); Gründl, Andreas, Dr., D-8000 München 70 (DE); Rosner, Peter, Dr., D-8000 München 2 (DE)
(74) Vertreter: Klunker . Schmitt-Nilson . Hirsch

(56) Entgegenhaltungen:
- FR-A- 2 043 974
- FR-A- 2 068 155

## Beschreibung

Die Erfindung bezieht sich auf einen elektrischen Antrieb gemäß dem Oberbegriff des Patentanspruchs 1.

Aus der Druckschrift FR-A-2 068 155 ist ein elektrischer Linearantrieb mit einem mit Stromleitern versehenen Stator und einem mit Dauermagneten versehenen Läufer, die mit einem Spaltabstand zwischen sich angeordnet sind, bekannt. Der Linearantrieb ist zur Verwendung beim Antrieb von Transporteinheiten, die einen mit Rädern versehenen und sich auf einer Fahrbahn bewegenden Wagen umfassen, vorgesehen. Der elektrische Linearantrieb umfaßt mindestens einen am Stator vorgesehenen Sensor, der die Relativstellung von Stator und Läufer erfaßt, und eine von dem Sensor gesteuerte elektronische Schalteinrichtung, welche bei antriebsgerechter Relativstellung von Stator und Läufer eine elektrische Verbindung zwischen den Stromleitern und einer Stromquelle herstellt. Die Transportbahnoberfläche des bekannten Linearantriebs kann jedoch nicht in üblicher Weise von anderen Fahrzeugen, die beispielsweise nicht mit einem Linearantrieb angetrieben werden, befahren werden.

Der Erfindung liegt somit die Aufgabe zugrunde, einen selbststeuernden Antrieb nach dem Oberbegriff des Patentanspruchs 1 zu schaffen, wobei eine Fahrbahnoberfläche nach wie vor das übliche Aussehen zeigt und auch in üblicher Weise von anderen Fahrzeugen befahren werden kann. Diese Aufgabe wird erfindungsgemäß gelöst durch die in dem Kennzeichenteil des Patentanspruchs 1 angegebenen Merkmale.

Den Unteransprüchen 2 und 3 sind nicht-triviale Verbesserungen des Gegenstands des Patentanspruchs 1 zu entnehmen.

Bei einem elektrischen Antrieb nach dem Patentanspruch 1 sorgt eine von einem Sensor gesteuerte elektronische Schalteinrichtung selbsttätig dafür, daß bei passenden Relativstellungen von Stator und Läufer Leitern Strom zugeführt oder Strom abgeführt wird. Die Leiter sind in den meisten Fällen in Form von Spulen oder Wicklungen vorgesehen. In vielen Fällen ist es günstig und daher bevorzugt, mehrere Sensoren längs der Bewegungsbahn des Läufers am Stator entlang vorzusehen. Obwohl im Patentanspruch 1 von "Stromleitern" und "Dauermagneten" gesprochen wird, soll der untere Grenzfall von nur einem Stromleiter oder nur einem Dauermagneten mit umfaßt sein.

Erfindungsgemäß wird ein auf die funktionell ohnehin vorgesehenen Dauermagnete oder auf gesondert zu diesem Zweck angeordnete Dauermagnete ansprechender Sensor verwendet. Dies führt - besonders im erstgenannten Fall - zu einem einfach aufgebauten Antrieb.

Eine Verwendung des erfindungsgemäßen Linearantriebs liegt beim Antrieb von Transporteinheiten, insbesondere Straßenfahrzeugen, Schienenfahrzeugen, Magnetschwebefahrzeugen, Jahrmarktsfahrzeugen, Magazin-Transporteinheiten, rollenden Gehsteigen, Paletten, Skiliften und Materialförderbahnen vor. Bei all diesen Einsatzzwecken kommen der einfache konstruktive Aufbau und die vielfältigen Regelungsmöglichkeiten zum Tragen.

Bei einer Reihe von Einsatzzwecken ist es günstig, erfindungsgemäß die Statorstromleiter in die Fahrbahn einzubetten, so daß die Fahrbahnoberfläche nach wie vor das übliche Aussehen aufweist und in üblicher Weise befahren werden kann. Man kann auch die Schalteinrichtung, ggf. eine Leistungssteuerungseinrichtung, ggf. eine Strombegrenzungseinrichtung, ggf. eine Geschwindigkeitsbegrenzungsschaltung, in der Fahrbahn versenkt anordnen.

Auch ist es günstig, erfindungsgemäß die Antriebs- bzw. Bremsfunktion von der eigentlichen Transporteinheit zu trennen und einem eigens dafür vorgesehenen Läufer, der seinerseits mit dem Stator zusammenwirkt, zu übertragen. Dieser Läufer kann mit mindestens teilweiser magnetischer Kompensation der Anziehungskräfte quer zur Bewegungsrichtung versehen sein. Die Antriebs- bzw. Bremsverbindung zwischen dem Läufer und der eigentlichen Transporteinheit erfolgt über einen Mitnehmer, der durch einen den Antriebs- bzw. Generatorbereich mit dem Transporteinheit-Bewegungsbereich verbindenden Schlitz ragt.

Bei einem erfindungsgemäßen Antrieb kann eine Umschaltbarkeit auf eine Generatorfunktion zum Bremsen vorgesehen sein.

Die Erfindung wird im folgenden anhand eines schematisiert dargestellten Ausführungsbeispiels noch näher erläutert, wobei zunächst anhand eines die beanspruchte Erfindung nicht verwirklichenden Linearantriebs in Fig. 1 - 4 die grundsätzlichen Verhältnisse beschrieben werden. Es zeigen:
- **Fig. 1**: einen Längsschnitt durch einen Linearantrieb längs I-I in **Fig. 4**;
- **Fig. 2**: eine Ansicht von unten auf den Stator des Linearantriebs von **Fig. 1** entsprechend II-II in **Fig. 1**;
- **Fig. 3**: eine Ansicht von oben auf den Läufer des Linearantriebs von **Fig. 1** entsprechend III-III in **Fig. 1**;
- **Fig. 4**: einen Querschnitt des Linearantriebs von **Fig. 1** längs IV-IV in **Fig. 1**;
- **Fig. 5**: einen Längsschnitt durch ein Laufteil eines erfindungsgemäßen Linearantriebs.

In den verschiedenen Ausführungsbeispielen werden Teile, die sich funktionell entsprechen, mit gleichen Bezugszeichen versehen.

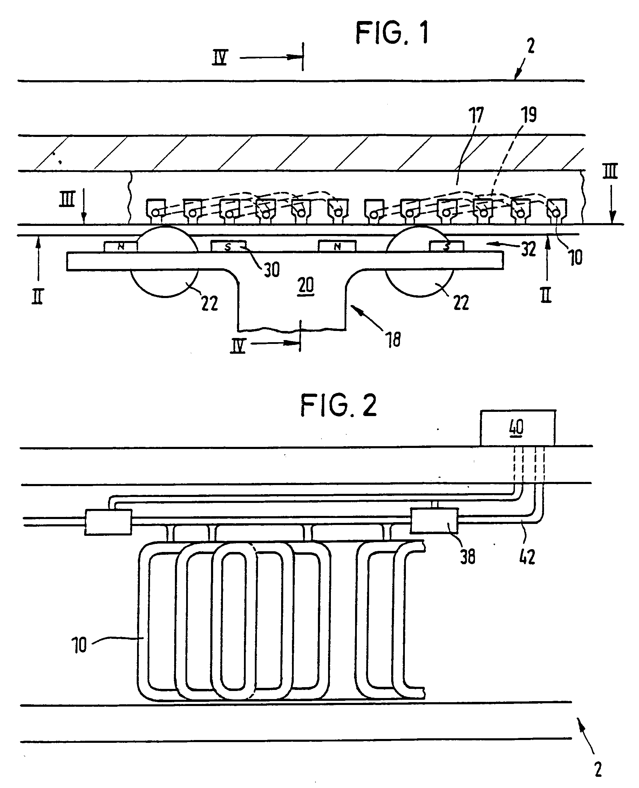

Bei dem in den Fig. 1 bis 4 dargestellten Linearantrieb handelt es sich um einen Antrieb, der für Transporteinheiten praktisch beliebiger Art geeignet ist. Konkret kann man sich ein magnetisch getragenes Fahrzeug zum Transport von Personen oder Lasten vorstellen.

Bei dieser Ausführungsform wird durchgehend aus Vereinfachungsgründen von "Antrieb" gesprochen, obwohl die Auslegung ohne weiteres so getroffen sein kann, daß bei einer Verlangsamung der Geschwindigkeit der Transporteinheit von Antriebsfunktion auf Generatorfunktion ungeschaltet werden kann.

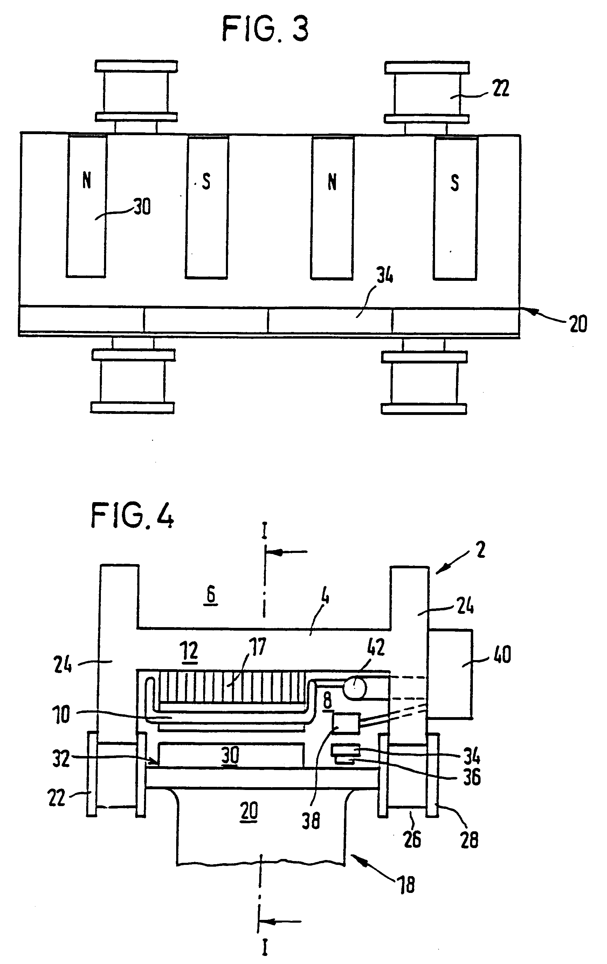

Der tragende Bestandteil des Stators 2 des Antriebs ist als liegender Doppel-T-Träger 4 ausgebildet. Somit entstehen, gesehen im Querschnitt des Trägers 4, eine obere, etwa rechteckige Ausnehmung 6 und eine untere, etwa rechteckige Ausnehmung 8, vgl. Fig. 4.

In der unteren Ausnehmung 8 ist ein Paket 17 aus sich in Längsrichtung erstreckenden, aufrecht stehenden, lamellierten Blechen aus ferromagnetischem Material befestigt. Das Paket 17 weist in seiner Unterseite Quernuten 19 auf, die einen gegenseitigen Mittenabstand haben, der einem Drittel des Mittenabstandes der weiter unten beschriebenen Dauermagnete 30 entspricht. In die Quernuten 19 sind Spulen 10 eingelegt, die in der Draufsicht etwa rechteckig sind. Jede Spule 10 besteht aus mehreren Windungen, wobei in den Zeichnungen aus Vereinfachungsgründen die Spulen jeweils nur aus einem dicken Draht bestehend dargestellt sind. Die quer zur Relativbewegungsrichtung von Stator und Läufer verlaufenden Queräste jeder Spule 10 befinden sich jeweils in einer Quernut 19, während die die Queräste verbindenden Längsäste seitlich des Pakets 17 liegen. Die Queräste jeder Spule 10 lassen zwischen sich zwei Quernuten 19 frei, die von den Querästen benachbarter Spulen besetzt werden. Die Längsäste führen seitlich des Pakets 17 zunächst vom ersten Querast schräg aufwärts und dann unter seitlicher Ausbuchtung nach außen steiler zurück nach unten zum anderen Querast, um auf diese Weise Platz für die Überkreuzung mit den Längsästen der beiden benachbarten Spulen zu schaffen.

Das Paket 17 bildet zusammen mit dem eingelegten Stromleitern 10 den funktionellen Teil des Stators 2.

Statt das Paket 17 mit Quernuten 19 auszubilden, können die zwischen den Quernuten 19 befindlichen Vorsprünge weggelassen werden und können die auf der flachen Unterseite des Pakets 17 angeordneten Spulen 10 mit einer Vergußmasse vergossen werden, die aus Kunststoff mit einem hohen Anteil von darin verteilten Eisenteilchen oder Eisenoxidteilchen sehr kleiner Korngröße von beispielsweise 70 µm besteht. Dabei müssen die Unterseiten der Stromleiter 10 zur Sicherstellung eines geordneten magnetischen Flusses frei von Vergußmasse bleiben.

Von der anzutreibenden Transporteinheit 18 ist nur der obere, mit dem Stator zusammenwirkende Bereich zeichnerisch dargestellt. Dieser obere Teil besteht aus einer Art Wagen 20 mit vier drehbar gelagerten Rädern 22, von denen zwei auf einem senkrechten Schenkel 24 und zwei auf dem anderen senkrechten Schenkel 24 des Trägers 4 abrollen, wobei die Räder 22 jeweils mit einer entsprechenden Spurrille 26 und Spurkränzen 28 versehen sind.

Auf der im wesentlichen ebenen Oberseite des Wagens 20 ist in Bewegungsrichtung hintereinander eine Reihe von Dauermagneten 30 angeordnet. Der unter den Magneten 30 befindliche Bereich des Wagens 20 besteht aus ferromagnetischem Material zur Schaffung eines magnetischen Rückschlusses auf der Rückseite der Dauermagneten 30. Die Dauermagnete 30 bilden zusammen mit diesem Rückschluß den Läufer 32 des Antriebs.

Die Dauermagnete 30 haben die Gestalt von sich quer zur Bewegungsrichtung des Wagens 20 erstreckenden, langgestreckten Quadern. Die Dauermagnete 30 sind, gemessen quer zur Bewegungsrichtung des Wagens 20, etwa so breit wie die Queräste der Stromleiter 10. Die untere Oberfläche der Vergußmasse bzw. des Blechpakets 17 hat einen Abstand von einigen Millimetern von den oberen Polflächen der Magnete 30.

In Bewegungsrichtung des Wagens 20 benachbarte Dauermagnete 30 haben einen Abstand voneinander, der jeweils dem in Bewegungsrichtung gemessenen Abstand der beiden Queräste einer Spule entspricht, jeweils gemessen von Mitte zu Mitte. Die Dauermagnete sind so auf dem Wagen 20 befestigt, daß bei den oberen Polflächen der Dauermagnete 30 Nordpole und Südpole miteinander abwechseln.

Die erste, vierte, siebte usw. Spule, die zweite,fünfte, achte usw. Spule sowie die dritte, sechste, neunte usw. Spule in Bewegungsrichtung des Wagens 20 sind jeweils hintereinandergeschaltet oder parallelgeschaltet. Somit entstehen magnetische Kreise, die jeweils im Stator 2 aus zwei mit räumlich entgegengerichteter Stromrichtung durchflossenen Querästen einer Spule bestehen, wobei der magnetische Fluß durch die wegen der Eisenpulverfüllung einen geringen magnetischen Widerstand aufweisende Vergußmasse bzw. das Blechpaket 17 geführt ist. Der dem Läufer 32 zugeordnete Teil jedes magnetischen Kreises besteht aus zwei Dauermagneten 30 mit dem entsprechenden beschriebenen Rückschluß.

Die Stromleiter 10 und die Dauermagnete 30 nehmen nicht die gesamte Breite zwischen den Stegen 24 bzw. zwischen den Rädern 22 ein. Im verbleibenden Raum des Wagens 20 ist eine weitere Reihe von als Dauermagneten ausgebildeten Steuermagneten 34 vorgesehen, die hinsichtlich Mittenabstand in Bewegungsrichtung des Wagens 20 mit den Dauermagneten 30 übereinstimmen, jedoch in Bewegungsrichtung länger sind, so daß sie aneinanderstoßen. In Normallage befinden sich die Kanten der Steuermagnete 34 in Bewegungsrichtung jeweils in der Mitte zwischen zwei Dauermagneten 30. Die Steuermagnete 34 sind auf einer längs verlaufenden Stange 36 angeordnet und mit Hilfe dieser Stange und eines nicht dargestellten Mechanismus in Bewegungsrichtung des Wagens 20 relativ zu den Dauermagneten 30 verschiebbar. Im verbleibenden Freiraum der unteren Ausnehmung 8 sind gegenüber den Steuermagneten 34 mehrere Hallsonden 38 in Bewegungsrichtung des Wagens 20 verteilt mit geringem Abstand über den Steuermagneten 34 angeordnet. Die Hallsonden 38 liefern ihr Signal "Steuermagnet 34 befindet sich unter der Sonde" an eine Schalteinrichtung 40, die in einem außen an einem Steg 24 metallisch leitend angeschraubten Gehäuse untergebracht ist. Die Schalteinrichtung 40 ist in diesem Gehäuse mit Kunststoff eingegossen, und die Verlustwärme der Schalteinrichtung wird über das Gehäuse an den Steg 24 abgeführt.

Von der Schalteinrichtung führt ein dreiphasiges Kabel 42 entlang dem Träger 4 oberhalb der Hallsonden 38. Dieses Kabel 42 versorgt sämtliche Spulen 10 mit Strom. Es ermitteln die Hallsonden 38 die Relativstellung des Wagens 20 längs des Stators 2, und die Schalteinrichtung 40 sorgt dafür, daß gerade die für die Antriebsfunktion passenden Stromleiter 10 eingeschaltet werden, so daß jeweils eine Vortriebskraft ausübende magnetische Kreise synchron eingeschaltet werden. Der gesamte Stator ist längs in eine Vielzahl von Abschnitten unterteilt, wobei für jeden Abschnitt eine Schalteinrichtung 40 vorgesehen ist. Der Abstand der Hallsonden 38 in Bewegungsrichtung ist kleiner als der Abstand zwischen dem vordersten und dem hintersten Steuermagnet 34 des Wagens 30. Der beschriebene Antrieb ist vollkommen selbststeuernd, da sich der Wagen 20 sozusagen selbst immer zum richtigen Zeitpunkt die richtigen Stromleiter 10 einschaltet.

Durch Verschieben der Stange 36 und damit der Steuermagnete 34 in Bewegungsrichtung des Wagens 20 läßt sich vom Wagen her Einfluß auf die Bewegung des Wagens nehmen. Wenn man zum Beispiel die Steuermagnete 34 auf die Mitte zwischen zwei benachbarte Dauermagnete 30 stellt, findet kein Antrieb statt. Wenn man zum Beispiel die Steuermagnete 34 um einen ganzen Mittenabstand der Dauermagnete 30 verschiebt, erfolgt der Antrieb in die umgekehrte Richtung. Geringere Verschiebungen der Steuermagnete 34 bewirken über eine künstliche Wirkungsgradverschlechterung des Antriebs eine Reduzierung der Vortriebskraft.

Die außen am Träger 4 angeschraubte Schalteinheit 40 ist über Steckverbindungen mit dem Kabel 42 und den Hallsonden 38 verbunden, so daß sie sich bei Defekten leicht auswechseln läßt.

Statt der beschriebenen Art der Spulenanordnung kann man auch mäanderförmig verlegte, beispielsweise in die Quernuten 19 des Stators 2 eingelegte Leiter vorsehen.

Beim dargestellten und beschriebenen Antrieb ist die Auslegung so, daß die magnetische Anziehung in Vertikalrichtung zwischen den Dauermagneten 30 und dem Stator 2 ausreicht, das Gewicht der Transporteinheit 18, gegebenenfalls mit Zuladung,zu tragen. Die Räder 22 sorgen dafür, daß der Luftspalt zwischen den Dauermagneten 30 und der Statorunterseite erhalten bleibt. Man kann aber die Auslegung auch so treffen, daß die Räder 22 oben auf dem Stator 2 abrollen, also das Gewicht der Transporteinheit 18 teilweise magnetisch und teilweise durch die Räder 22 getragen wird, oder daß sowohl auf der Statorunterseite als auch auf der Statoroberseite ablaufende Räder vorgesehen sind.

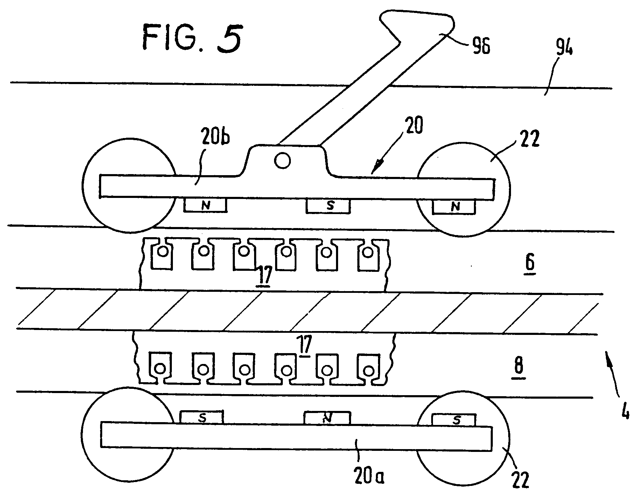

In Fig. 5 ist ein Linearantrieb dargestellt, der sich vom Linearantrieb der Ausführungsform gemäß Fig. 1 bis 4 im wesentlichen durch folgendes unterscheidet: Sowohl in die untere Ausnehmung 8 als auch in die obere Ausnehmung 6 des Trägers 4 ist ein Blechpaket 17 mit Quernuten 19 und Stromleitern 10 wie in Fig. 1 eingebaut, wobei beim oberen Blechpaket 17 die Quernuten 19 nach oben weisen. Der Wagen 20 weist ein Unterteil 20a und ein Oberteil 20b auf, wobei der Unterteil hinsichtlich der Räder 22 und der Anordnung der Dauermagnete 30 wie im Zusammenhang mit Fig. 1 beschrieben ausgebildet ist und der Oberteil 20b spiegelbildlich zum Unterteil 20a ist. Der Unterteil 20a und der Oberteil 20b sind durch seitlich um den Träger 4 herumgeführte, nicht dargestellte Verbindungsarme miteinander verbunden. Die Räder 22 des oberen Wagenteils 20b rollen oben auf den senkrechten Stegen 24 des Trägers 4 ab. Somit sind die auf den Wagen 20 wirkenden magnetischen Anziehungskräfte in sich kompensiert.

Der Wagen 20 bildet einen Läufer, der unterhalb einer Abrollfläche 94 für die eigentliche, nicht dargestellte Transporteinheit in einem Graben läuft. Vom Wagen 20 ragt über die Abrollfläche 94 nach oben ein Mitnehmer 96, der die fortzubewegende Transporteinheit ergreift.

Bei einem geometrisch anders gestalteten Träger 4 ohne Quersteg 12 kann man statt zweier mit Blechpaketen aufgebauter Statoren einen einzigen mit Luftstromleitern oder vergußmassegefüllten Leitern einsetzen. Vorzugsweise weisen dann die sich gegenüberstehenden Dauermagnete 30 mit entgegengesetzter Polarität zum Stator.

## Patentansprüche

1. Elektrischer Antrieb mit einem mit Stromleitern (10) versehenen, ortsfest in bezug auf eine Fahrbahn (94) angeordneten Stator (2) und einem mit Dauermagneten (30) versehenen Läufer (32), die mit einem Spaltabstand zwischen sich angeordnet sind, mit mindestens einem am Stator (2) vorgesehenen Sensor (38), der die Relativstellung von Stator (2) und Läufer (32) erfaßt, und mit einer von dem Sensor (38) gesteuerten elektronischen Schalteinrichtung (40), die bei antriebsgerechter beziehungsweise generatorgerechter Relativstellung von Stator (2) und Läufer (32) eine elektrische Verbindung zwischen den Stromleitern (10) und einer Stromquelle beziehungsweise Stromsenke herstellt, zur Verwendung beim Antrieb von auf der Fahrbahn (94) bewegten Transporteinheiten, insbesondere Straßenfahrzeugen, Schienenfahrzeugen, Magnetschwebefahrzeugen, Jahrmarktsfahrzeugen, Magazintransporteinheiten, rollenden Gehsteigen, Paletten, Skiliften, Materialförderbahnen, **dadurch gekennzeichnet**, daß die Stator-Stromleiter (10) in die Fahrbahn eingebettet sind, wobei die Fahrbahn im wesentlichen horizontal angeordnet ist und eine im wesentlichen ebene Oberfläche aufweist, und daß ein Wagen (20) als Läufer ausgebildet ist, der unterhalb der Fahrbahn (94) für die Transporteinheit in einem Graben auf einem parallel zur Fahrbahn verlaufenden Träger (4) abrollt, wobei vom Wagen (20) über die Fahrbahn (94) nach oben ein Mitnehmer (96) ragt, der die fortzubewegende Transporteinheit ergreift.

2. Elektrischer Antrieb nach Anspruch 1, **dadurch gekennzeichnet**, daß der im Graben angeordnete Träger (4) obere und untere Stege (24) aufweist, auf denen der Wagen (20) mit Rädern (22) fährt.

3. Elektrischer Antrieb nach Anspruch 2, **dadurch gekennzeichnet**, daß der Wagen (20) einen Unterteil (20a) und einen Oberteil (20b) aufweist, die durch seitlich um den Träger (4) herumgeführte Verbindungsarme miteinander verbunden sind, wobei die Räder (22) des Oberteils (20b) oben auf den senkrechten Stegen (24) des Trägers (4) abrollen und die Räder des Unterteils (20a) unten unter den senkrechten Stegen (24) des Trägers (4) abrollen.

## Claims

1. An electric drive comprising a stator (2) provided with current conductors (10) and disposed in stationary manner with respect to a travel way (94), and a movable part (32) provided with permanent magnets (30), said stator and said movable part being disposed with a gap distance therebetween, and comprising at least one sensor (38) provided on the stator (2) and detecting the relative position of stator (2) and movable part (32), as well an electronic switching means (40) controlled by the sensor (38) and establishing an electrical connection between the current conductors (10) and a current source or current sink, respectively, when stator (2) and rotor (32) are in a drive-effective or generator-effective relative position, respectively, for use in driving transportation units moved on the travel way (94), in particular road vehicles, rail vehicles, magnetic leviation vehicles, fair vehicles, magazine transportation units, rolling footways, pallets, ski lifts, material conveyors,
characterized in that the stator current conductors (10) are embedded in the travel way, the travel way being disposed substantially horizontally and having a substantially planar surface, and in that a carriage (20) is designed as movable part, which performs a rolling motion underneath the travel way (94) for the transportation unit in a trench, on a beam (4) extending parallel to the travel way, with a carrier (96) projecting from the carriage (20) upwardly beyond the travel way (94) and engaging with the transportation unit to be conveyed.

2. An electric drive according to claim 1,
characterized in that the beam (4) disposed in the trench has upper and lower webs (24) on which the carriage (20) moves by way of wheels (22).

3. An electric drive according to claim 2,
characterized in that the carriage (20) has a bottom part (20a) and a top part (20b) which are connected to each other by connecting arms passed laterally around the beam (4), the wheels (22) of the top part (20b) performing a rolling motion on top of the vertical webs (24) of the beam (4) and the wheels of the bottom part (20a) performing a rolling motion underneath the vertical webs (24) of the beam (4).

## Revendications

1. Entraînement électrique avec un stator (2) pourvu de conducteurs électriques (10), disposé localement fixe par rapport à une piste de déplacement (94), et un curseur (32), pourvu d'aimants permanents, disposés avec un entrefer entre eux, avec au moins un capteur (38), prévu sur le stator (2), appréhendant la position relative entre le stator (2) et le curseur (32), et avec un dispositif de commutation (40) électronique, commandé par le capteur (38), qui, en cas de position relative correcte en entraînement ou en génératrice, établit une liaison électrique entre les conducteurs électriques (10) et une source électrique, ou un puits électrique, pour l'utilisation lors de l'entraînement d'unités de transport déplacées sur la piste de déplacement (94), en particulier de véhicules routiers, véhicules ferroviaires, véhicules à sustentation magnétique, véhicules de foires, unités de transports pour entrepôts, escaliers roulants palettes, remontepente de ski, bandes transporteuses de matériaux, caractérisé en ce que les conducteurs électriques (10) sont noyés dans la piste de déplacement, la piste de déplacement étant disposée sensiblement horizontalement et présentant une surface sensiblement plane, et en ce qu'un chariot (20) est réalisé à titre de curseur, roulant au-dessous de la piste de déplacement (94) destinée à l'unité de transport, dans une fosse, sur un support (4) s'étendant parallèlement à la piste de déplacement, un organe d'entraînement (96), saisissant l'unité de transport à déplacer dépassant depuis le chariot (20), au-dessus de la piste de déplacement (94), vers le haut.

2. Entraînement électrique selon la revendication 1, caractérisé en ce que le support (4) disposé dans la fosse présente des nervures supérieures et inférieures (24), sur lesquelles le chariot (20) se déplace à l'aide de roues (22).

3. Entraînement électrique selon la revendication 2, caractérisé en ce que le chariot (20) présente une partie inférieure (20a) et une partie supérieure (20b), reliées ensemble au moyen de bras de liaison passés autour du support (4), les roues (22) de la partie supérieure (20b) roulant au-dessus, sur les nervures (24) verticales du support (4), et les roues de la partie inférieure (20a) roulant au-dessous, sous les nervures verticales (24) du support (4).
